# EUROPEAN PATENT SPECIFICATION

(11) **EP 4 579 428 B1**
(45) Date of publication and mention of the grant of the patent: **26.08.2026**
(21) Application number: 24219055.1
(22) Date of filing: 11.12.2024
(51) Int. Cl.: G06F 3/12, G06Q 20/20, G07G 5/00

(54) **PRINT DATA GENERATION DEVICE AND PRINT DATA GENERATION METHOD**
DRUCKDATENERZEUGUNGSVORRICHTUNG UND DRUCKDATENERZEUGUNGSVERFAHREN
DISPOSITIF DE GÉNÉRATION DE DONNÉES D'IMPRESSION ET PROCÉDÉ DE GÉNÉRATION DE DONNÉES D'IMPRESSION

(30) Priority: 27.12.2023 JP 2023220247
(43) Date of publication of application: 02.07.2025
(73) Proprietor: Star Micronics Co., Ltd., Shizuoka-shi, Shizuoka 422-8654 (JP)
(72) Inventor: Ono, Teppei, Shizuoka-shi, Shizuoka (JP); Igarashi, Keisuke, Shizuoka-shi, Shizuoka (JP); Hara, Yusuke, Shizuoka-shi, Shizuoka (JP); Matsushita, Yuichi, Shizuoka-shi, Shizuoka (JP)
(74) Representative: Grünecker Patent- und Rechtsanwälte PartG mbB

(56) References cited:
- WO-A1-2014/027678
- US-A1- 2005 050 052
- US-B2- 11 727 392
- US-B2- 7 472 345

## Description

### CROSS-REFERENCES

### BACKGROUND OF THE INVENTION

### 1. Field of the Invention

The present invention relates to a print data generation device, a print data generation method, a print API generation device, and a print API generation method. More specifically, the present invention is suitable for use in a device and a method for generating print data used for merge printing, and a device and a method for generating a print data generation API.

### 2. Description of the Related Art

In a known conventional system that executes printing by transmitting print data of a receipt to a printer from a POS terminal, print data including commands for character styling, paper cutting, and so on are transmitted together with print instructions (see Japanese Patent No. 7006096). FIG. 4 of Japanese Patent No. 7006096 shows print data including a plurality of text string print-related command groups constituted by combinations of text string print instruction commands, which include dedicated command code and text string information, and text string styling commands. The printer converts the text code included in the text string printing instruction command of each text string print-related command group into corresponding font data, and then executes printing after applying the styling instructed by the text string styling command.

Furthermore, conventionally, a print data generation API (Application Programming Interface) that can be called from each programming language is provided to facilitate control of a printer from upper-level software of a POS terminal, and print data including the commands described above are generated by the print data generation API. When the print data generation API is used to generate print data including a plurality of commands corresponding to print elements (the item parts of a receipt, for example) having a variable number of elements, as shown in FIG. 4 of Japanese Patent No. 7006096, the number of elements is acquired on the side of an application that calls the print data generation API from field data in which information about the text strings to be printed is recorded, and the print data are generated by repeatedly executing the print data generation API a number of times corresponding to the number of elements.

However, when the print data generation API is repeatedly executed a plurality of times, description of loops, conditional branches, and so on must be incorporated into the program code of the application that calls the print data generation API, leading to a problem in that the code becomes unintuitive and difficult to understand. WO 2014/027678 A1 discloses a point of sale printer with a library of print APIs.

### SUMMARY OF THE INVENTION

The present invention has been designed to solve this problem, and an object thereof is to make it possible to execute merge printing by generating print data having a variable number of print elements without incorporating description required in order to repeatedly call a print data generation API in the program code of an application serving as the call source.

To solve the problem described above, in the present invention, print data including a plurality of print-related commands are generated using a template and field data including data of print elements to be inserted into merge fields of the template. The template includes one or more API call commands for generating the print-related commands, and the one or more API call commands are constituted by commands of the smallest unit not including repetitions, the number of which corresponds to the number of print elements, which is variable. A print data generation API including a plurality of API call commands is generated by specifying a range of API call commands for repeatedly executing processing a number of times corresponding to the variable number of print elements from the template on the basis of the content of both the template and the field data or the content of the template, and replacing merge fields included in the API call commands, including repeat substitutions within the specified range, with the data of the print elements, whereupon print data including print-related commands into which the data of the print elements have been inserted are generated by executing the generated print data generation API.

According to the present invention, configured as described above, on the basis of a template in which one or more API call commands are constituted by commands of the smallest unit not including repetitions, a print data generation API written such that the API call commands are executed repeatedly a number of times corresponding to the variable number of print elements is generated, whereupon print data are generated by executing the print data generation API. The print data can thus be generated by executing the plurality of API call commands included in the generated print data generation API in order. As a result, it is possible to execute merge printing by generating print data having a variable number of print elements without incorporating description required in order to repeatedly call a print data generation API in the program code of an application serving as the call source.

### BRIEF DESCRIPTION OF THE DRAWINGS

FIG. 1 is a schematic view showing an overall example configuration of a printing system according to an embodiment;
FIG. 2 is a view showing an example hardware configuration of the printing system according to this embodiment;
FIG. 3 is a block diagram showing an example functional configuration of a host device according to this embodiment;
FIGS. 4A and 4B are views showing types of print elements included in field data and types of API call commands included in a template;
FIG. 5 is a view illustrating an example of template substitution;
FIGS. 6A and 6B are views illustrating processing content of a print API generation unit according to a first embodiment;
FIG. 7 is a view showing a print result based on print data generated from the print data generation API shown in FIG. 6B;
FIGS. 8A and 8B are views illustrating processing content of a print API generation unit according to a second embodiment;
FIG. 9 is a view showing a print result based on print data generated from the print data generation API shown in FIG. 8B;
FIG. 10A is a flowchart showing an example operation of the print API generation unit according to the second embodiment;
FIG. 10B is a flowchart showing an example operation of the print API generation unit according to the second embodiment;
FIGS. 11A and 11B are views showing an example of a substitute template of a generation process according to the second embodiment;
FIGS. 12A and 12B are views illustrating processing content of a print API generation unit according to a third embodiment;
FIG. 13 is a view showing a print result based on print data generated from the print data generation API shown in FIG. 12B;
FIG. 14A is a flowchart showing an example operation of the print API generation unit according to the third embodiment;
FIG. 14B is a flowchart showing an example operation of the print API generation unit according to the third embodiment;
FIGS. 15A to 15C are views showing an example of a substitute template of a generation process according to the third embodiment; and
FIGS. 16A and 16C are views illustrating an example of template substitution including format specification.

### DESCRIPTION OF THE PREFERRED EMBODIMENTS

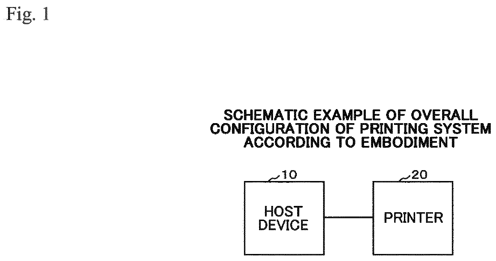

An embodiment of the present invention will be described below on the basis of the figures. FIG. 1 is a schematic view showing an overall example configuration of a printing system according to an embodiment. As shown in FIG. 1, the printing system according to this embodiment is configured to include a host device 10 and a printer 20. In the configuration shown in FIG. 1, the host device 10 includes a print data generation device and a print API generation device according to this embodiment.

The host device 10 and the printer 20 are connected by a wired interface cable such as a serial cable, Ethernet (registered trademark), or USB (Universal Serial Bus), for example. Alternatively, the host device 10 and the printer 20 may be connected through a wireless communication network such as Bluetooth (registered trademark), Wi-Fi (registered trademark), or a wireless LAN. Alternatively, the host device 10 and the printer 20 may be connected through a communication network such as the Internet.

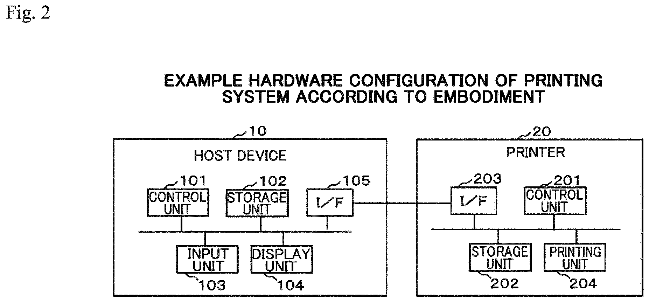

FIG. 2 is a view showing an example hardware configuration of the printing system according to this embodiment. As shown in FIG. 2, the host device 10 includes, as a hardware configuration, a control unit 101, a storage unit 102, an input unit 103, a display unit 104, and an I/F 105. Further, the printer 20 includes, as a hardware configuration, a control unit 201, a storage unit 202, an I/F 203, and a printing unit 204.

The control unit 101 of the host device 10 is constituted by a microcomputer including a CPU, a RAM, a ROM, and so on, for example, and operates in accordance with an operating system and other programs stored in the storage unit 102 so as to execute information processing using various data stored in the storage unit 102. The control unit 101 may include a DSP (Digital Signal Processor) and so on in addition to the microcomputer.

The storage unit 102 is constituted by a computer-readable storage medium. For example, the storage unit 102 is configured to include a ROM, a RAM, a hard disk, a semiconductor memory, or the like. The storage unit 102 stores various programs executed by the control unit 101. The various programs include an application program for generating field data to be inserted into merge fields when executing merge printing, a print data generation program for generating print data using the field data, and so on. The field data are data including data of one or more print elements, and the number of print elements included in the field data (the number of print elements, or in other words the number of elements of the merge printing) is variable.

The storage unit 102 also stores various data including data used in the processing of the control unit 101 and data generated in the course of the processing. The various data include a template and field data used when generating the print data, a print data generation API (also referred to as a substitute template) generated by inserting the field data into merge fields included in the template, print data having a command structure generated by executing the print data generation API, and so on. The template and the field data will be described in detail below.

The input unit 103 is constituted by a keyboard, a mouse, a touch panel, or the like, for example, and inputs data corresponding to operation input by a user into the control unit 101. The display unit 104 is constituted by a liquid crystal display or the like, for example, and displays information in response to instructions input from the control unit 101. The I/F 105 is constituted by a communication module that exchanges data with the printer 20, and outputs various data to the printer 20 in response to instructions input from the control unit 101.

In this embodiment, data to be printed, which are generated by the application program in the storage unit 102 on the basis of the control of the control unit 101, are converted into print data having a command structure that can be understood by the printer 20, whereupon the converted print data are output to the printer 20 from the I/F 105. When executing merge printing, the control unit 101 uses the template and the field data to generate print data including a plurality of print-related commands. For example, print data of a receipt, which includes names, prices, and so on of purchased items as print elements having a variable number of elements, are generated by the host device 10, whereupon the receipt is printed by the printer 20 on the basis of the generated print data.

The control unit 201 of the printer 20 is constituted by a microcomputer including a CPU, a RAM, a ROM, and so on, for example, and performs overall control of the printer 20 in accordance with a program stored in the storage unit 202. The control unit 201 may include a DSP and so on in addition to the microcomputer. The storage unit 202 is configured to include a ROM, a RAM, a semiconductor memory, or the like, and stores various programs and data required for executing printing.

The I/F 203 is constituted by a communication module that exchanges data with the host device 10, and receives print data transmitted from the host device 10 and outputs the received print data to the control unit 201. The printing unit 204 executes printing under the control of the control unit 201 in accordance with print-related commands indicated by the print data transmitted from the host device 10, and thereby forms an image based on the print data on a recording medium such as a printing sheet.

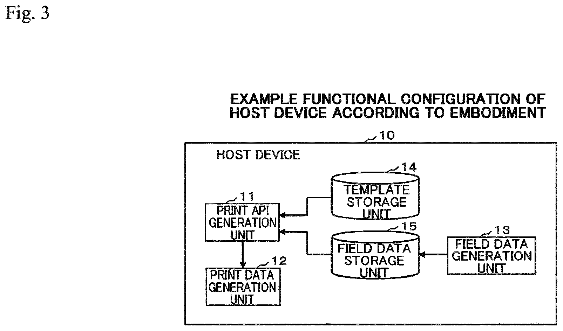

FIG. 3 is a block diagram showing an example functional configuration of the host device 10. As shown in FIG. 3, the host device 10 according to this embodiment includes a print API generation unit 11, a print data generation unit 12, a field data generation unit 13, a template storage unit 14, and a field data storage unit 15. Processing of the print API generation unit 11, the print data generation unit 12, and the field data generation unit 13 is executed by the control unit 101 of FIG. 2 using a program stored in the storage unit 102. The template storage unit 14 and the field data storage unit 15 are constituted by the storage unit 102 of FIG. 2.

The field data generation unit 13 generates field data including data of print elements to be inserted into merge fields of a template stored in the template storage unit 14 in response to an operation of the application program stored in the storage unit 102. The field data generated by the field data generation unit 13 are stored in the field data storage unit 15.

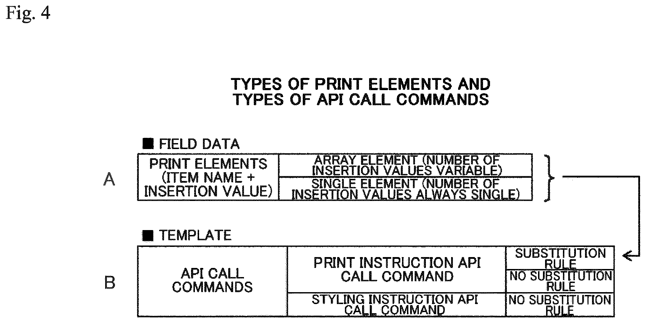

Each print element is constituted by a combination of an item name and an insertion value (a text string, a numeric string, a combination thereof, or the like) to be inserted into the merge field. As shown in FIG. 4A, the print elements include print elements (referred to hereinafter as array elements) in which one or more insertion values are arranged and printed on the printing sheet, and print elements (referred to hereinafter as single elements) in which only one insertion value is arranged and printed on the printing sheet. The number of elements (the number of insertion values) in each of the array elements is variable. The number of elements in the single element, however, is always fixed at a single element. When printing a receipt, for example, the names, prices, and so on of the purchased items are examples of array elements, and the store name, the purchase time and date, and so on are examples of single elements.

The template storage unit 14 stores a template that is used to generate print data using field data. The template includes a plurality of API call commands for generating print-related commands. The print-related commands include commands instructing printing (referred to hereinafter as print instruction commands) and a command instructing styling (referred to hereinafter as styling instruction commands).

The API call commands are commands instructing call-up of an API library configured to generate print-related commands. As shown in FIG. 4B, the API call commands include commands (referred to hereinafter as print instruction API call commands) for calling a print instruction command generation library, and commands (referred to hereinafter as styling instruction API call commands) for calling a styling instruction command generation library.

The print instruction API call commands include commands including a substitution rule for inserting a print element into a merge field, and commands not including the substitution rule. The print instruction API call commands that include the substitution rule include cases in which array element data are inserted into a merge field in accordance with the substitution rule and cases in which single element data are inserted into a merge field in accordance with the substitution rule. The styling instruction API call commands, meanwhile, do not include the substitution rule.

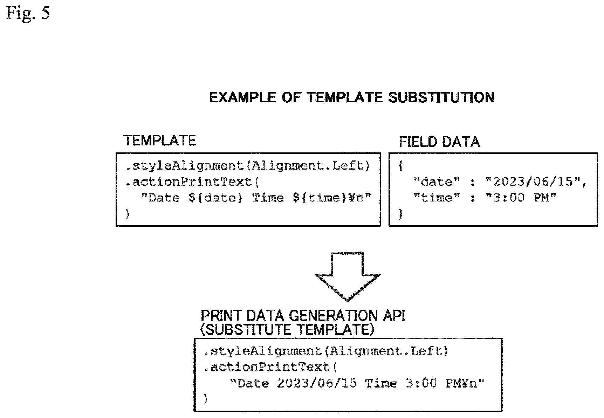

FIG. 5 is a view illustrating an example of template substitution. As shown in FIG. 5, in the substitution rule employed in this embodiment, a part that starts with a symbol ${ and ends with a symbol } is set as the merge field, and the text string in the merge field is replaced with the insertion value of a print element acquired from the field data using the internal text string surrounded by ${} as a key. FIG. 5 shows an example in which the merge fields of the print instruction API call commands are replaced with data of single elements.

The plurality of API call commands included in the template are constituted by a group of commands of the smallest unit not including repetitions, the number of which corresponds to the variable number of print elements. A group of commands of the smallest unit not including repetitions means that for the print instruction API call commands including the substitution rule, the command group does not include a number API call commands corresponding to the number of elements in the array elements, even in the case of array elements for which a plurality of insertion values are repeatedly inserted.

The print API generation unit 11 generates a print data generation API (a substitute template) including a plurality of API call commands by specifying, on the basis of the content of both the template and the field data or the content of the template, a range (occasionally abbreviated to "repeat range" in the following description) of API call commands for repeatedly executing processing a number of times corresponding to the variable number of print elements from among the plurality of API call commands included in the template, and replacing the merge fields included in the API call commands, including repeat substitutions in the specified range, with the data of the print elements.

The print data generation unit 12 then generates print data including print-related commands into which the data of the print elements have been inserted by executing the print data generation API generated by the print API generation unit 11. More specifically, the print data generation unit 12 calls an API library configured to generate print-related commands in accordance with the plurality of API call commands included in the print data generation API, and generates print data including a plurality of print-related commands by executing processing prescribed by the API library. The generated print data are then output to the printer 20.

Three embodiments relating to the processing of the print API generation unit 11 will be described below. In a first embodiment, the repeat range of the API call commands is specified on the basis of the content of the template. In second and third embodiments, the repeat range of the API call commands is specified on the basis of the content of both the template and the field data.

(First embodiment) In the first embodiment, the template has a hierarchical structure of a plurality of API call commands and also includes a repeat start flag on one of the layers of the hierarchy. The print API generation unit 11 specifies the repeat range on the basis of the repeat start flag and the hierarchical structure. The hierarchical structure is a typical structure used to specify a range in which to apply text styling in a print data generation API. More specifically, in the print data generation API, text styling specified by a styling instruction API call command on a certain layer of the hierarchy is applied to the relevant layer and layers therebelow, but is not applied to layers thereabove. In the first embodiment, this mechanism is used to specify the repeat range.

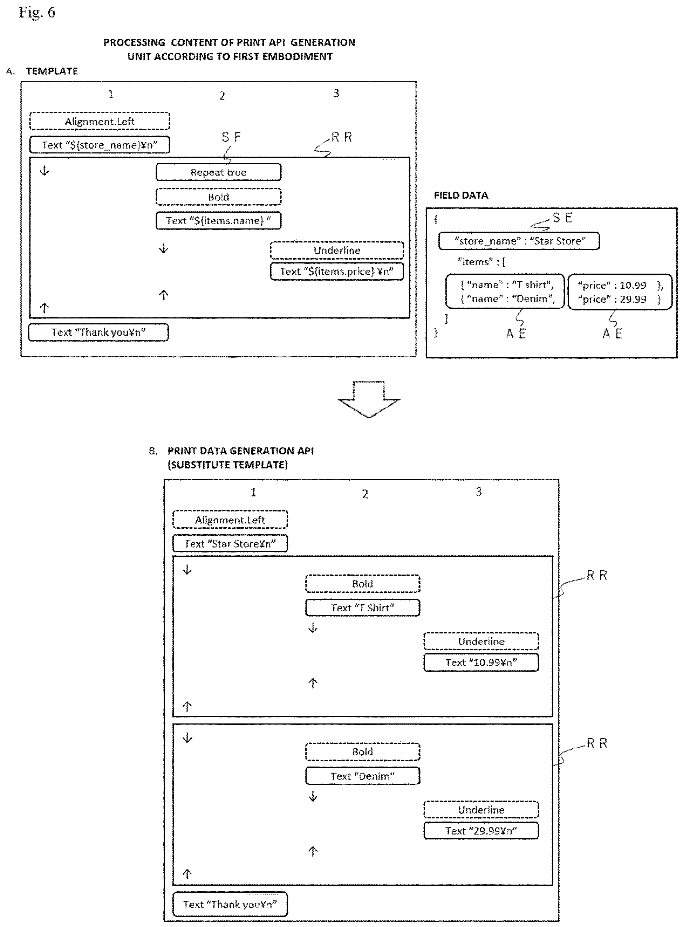

FIGS. 6A and 6B are views illustrating the processing content of the print API generation unit 11 according to the first embodiment. In FIGS. 6A and 6B, styling instruction API call commands are indicated by dotted-line frames, and print instruction API call commands are indicated by solid-line frames. Among the print instruction API call commands, commands including the substitution rule are indicated by thick solid-line frames, and commands not including the substitution rule are indicated by thin solid-line frames. The execution sequence of the API call commands is indicated from top to bottom in the figure, and the depth of the hierarchy is indicated from left to right in the figure. Note that "\n" included in the API call command indicates a line break instruction. The points described here apply similarly to the figures cited below.

FIG. 6A shows an example of a template with a hierarchical structure and field data, wherein a repeat range RR specified by the print data API generation unit 11 is indicated on the template by a rectangular frame. The template includes hierarchy control functions, and in the figure, the symbol "↓" indicates downward movement through the layers of the hierarchy, and the symbol "↑" indicates upward movement through the layers of the hierarchy. The repeat range RR also includes hierarchy control functions. FIG. 6B shows an example of a print data generation API (a substitute template) generated by replacing the merge fields included in the API call commands, including repeat substitutions within the specified range, with the data of the print elements included in the field data. In this embodiment, an example in which the field data are formed using the JSON format is described, but the present invention is not limited thereto. The field data can be formed using any desired data format, such as XML, CSV, Flat file, and so on, for example.

In the example of FIGS. 6A and 6B, the template is constituted by a three-layer hierarchy. From the start of the first layer, one styling instruction API call command and one print instruction API call command are described, and at the start of the next layer, i.e., the second layer, a repeat start flag SF is described, after which one styling instruction API call command and one print instruction API call command are described. Further, after entering the third layer, one styling instruction API call command and one print instruction API call command are described, after which the hierarchy returns to the first layer, where one print instruction API call command is described.

As shown in FIG. 6A, the print API generation unit 11 specifies the API call commands included in the second layer, which includes the repeat start flag SF, and the third layer therebelow as the range (the repeat range RR) of API call commands for executing repeated substitutions. More specifically, the styling instruction API call command and print instruction API call command included in the second layer and the styling instruction API call command and print instruction API call command included in the third layer are specified as the repeat range RR. The repeat range RR also includes hierarchy control functions associated with the specified API call commands, as described above. The hierarchy control functions associated with the specified API call commands are hierarchy control functions (in the example of FIG. 6A, four hierarchy control functions indicated by the symbols "↓" and "↑" on the first and second layers) for controlling transitions to the layers (in the example of FIG. 6A, the second and third layers) including the specified API call commands or transitions from these layers.

The print API generation unit 11 generates the print data generation API (the substitute template) by replacing the merge fields of the plurality of print instruction API call commands included in the template with the data (the insertion values) of the print elements included in the field data. At this time, as shown in FIG. 6B, the print API generation unit 11 copies the API call commands and the associated hierarchy control functions included in the specified repeat range RR until the number of copies is identical to the number of array elements included in the field data, and then repeatedly executes processing for replacing the merge fields of the print instruction API call commands with the array element data a number of times corresponding to the number of array elements. The number of array elements can be ascertained by referring to the field data using the internal text string surrounded by ${} as a key.

As shown in FIG. 6A, the field data include one single element SE and two array elements AE. In the example of FIG. 6A, the one single element SE is the store name, and the two array elements AE are the product name and the price. The two array elements AE both have two elements (two insertion values). When the field data are configured in this manner, the print API generation unit 11 copies one set of the plurality of API call commands included in the repeat range RR and then executes substitution processing twice in order to insert the insertion values into the merge fields for the print instruction API call commands. FIG. 6B shows the print data generation API generated as a result of this processing.

More specifically, the merge field "${store_name}" of the print instruction API call command of the first layer shown in FIG. 6A is replaced with the data "Star Store" of the single element SE included in the field data. The data "Star Store" of the single element SE used in this substitution are acquired from the field data using the internal text string surrounded by ${} as a key (likewise for the following API call commands). Further, the merge field "${items.name}" of the print instruction API call command of the second layer included in the repeat range RR is replaced twice with the data "T shirt" and "Denim" of the array element AE included in the field data, and the merge field "${items.price}" of the print instruction API call command of the third layer is replaced twice with the data "10.99" and "29.99" of the array element AE included in the field data.

The API call commands including the array element substitution rule and the styling instruction API call commands associated therewith must be executed repeatedly in accordance with the number of array elements, but in this embodiment, the print data generation API is generated by copying the API call commands in the required number. Therefore, in the call source application (the print data generation program), the plurality of API call commands included in the generated print data generation API shown in FIG. 6B need only be executed once each in order from the start. As a result, there is no need to incorporate description required for repeatedly calling the API call commands in the program code of the call source application. This applies similarly to the second and third embodiments to be described below.

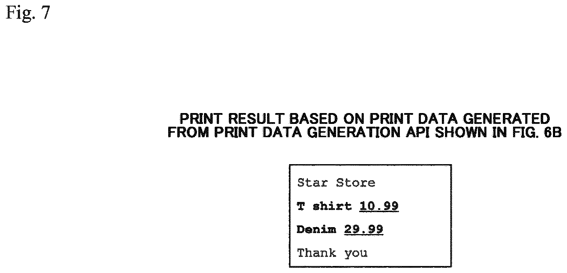

FIG. 7 is a view showing a print result obtained in a case where print data generated by the print data generation unit 12 on the basis of the print data generation API shown in FIG. 6B are output to the printer 20. As described above, as a result of executing the substitution processing twice on the print instruction API call commands of the second and third layers within the repeat range RR, "T shirt" and "Denim" are printed as the product names "name" on the second layer, and " 10.99" and "29.99" are printed as the prices "price" on the third layer. The API call commands on the second layer do not include "\n", and therefore the "name" of the second layer and the "price" of the third layer are printed without line breaks.

In the example of the print data generation API shown in FIG. 6B, the text styling "Alignment left" is specified at the start of the first layer, and therefore the text styling "Alignment left" is applied to all of the text strings printed on the basis of the print instruction commands generated from the print instruction API call command described on the first layer and the layers therebelow. Further, the styling instruction "Bold" is specified on the second layer, and therefore the text styling "Bold" is applied to all of the text strings printed on the basis of the print instruction commands generated from the print instruction API call command described on the second layer and the layers therebelow. Furthermore, the styling instruction "Underline" is specified on the third layer, and therefore the text styling "Underline" is applied to the text string printed on the basis of the print instruction command generated from the print instruction API call command described on the third layer.

(Second embodiment) In the second embodiment, the template does not have a hierarchical structure and does not include the repeat start flag SF. The print API generation unit 11 specifies the repeat range RR on the basis of both the types of the API call commands included in the template and the field data.

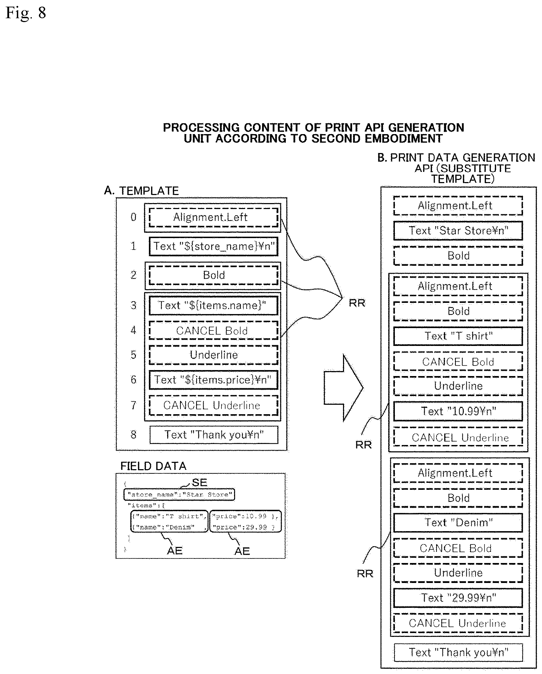

FIGS. 8A and 8B are views illustrating the processing content of the print API generation unit 11 according to the second embodiment. Note that in order to facilitate understanding of the description, indexes IDXᵢ (i = 0, 1, 2, ...) are set in ascending order from "0" in relation to the plurality of API call commands included in the template.

FIG. 8A shows an example of a template not having a hierarchical structure and field data, wherein the repeat range RR specified by the print API generation unit 11 is indicated on the template by rectangular frames. Since there is no hierarchical structure for specifying the application range of the text styling, the template includes both styling instruction API call commands for specifying the application of text styling and styling instruction API call commands for canceling the application of text styling. The field data are the same as the data shown in FIG. 6A. FIG. 8B shows an example of a print data generation API (a substitute template) generated by replacing the merge fields included in the API call commands, including repeat substitutions within the specified range, with the data of the print elements included in the field data.

As shown in FIG. 8A, the print API generation unit 11 specifies, from the print instruction API call commands including the substitution rule for the repeated array elements, among the plurality of print elements included in the field data, all of the API call commands included immediately before print instruction API call commands not including the array element substitution rule, and the styling instruction API call commands existing before the print instruction API call commands including the array element substitution rule, as the repeat range RR. Which of the plurality of API call commands included in the template are print instruction API call commands including the substitution rule for the array elements AE can be determined by referring to the field data using the text strings in the merge fields of the print instruction API call commands as a key.

In the template shown in FIG. 8A, the API call commands with the indexes IDX₀ and IDX₂ are styling instruction API call commands existing prior to print instruction API call commands including the substitution rule for the array elements AE, and therefore these two commands are included in the repeat range RR. The API call command with the index IDX₁ is a print instruction API call command, but by referring to the field data using the text string "store_name" of the merge field as a key, it is determined that the print element corresponding to the text string "store_name" is not an array element AE. Accordingly, the API call command with the index IDX₁ is not included in the repeat range RR.

The API call command with the index IDX₃ is a print instruction API call command, and by referring to the field data using the text string "items.name" of the merge field as a key, it is determined that the print element corresponding to the text string "items.name" is an array element AE. Accordingly, the print API generation unit 11 determines that the API call command with the index IDX₃ is a print instruction API call command including the substitution rule for the array elements AE, and starts to search for the repeat range RR using this position as a start point.

The API call commands with the indexes IDX₄, IDX₅, and IDX₇ following the index IDX₃ are styling instruction API call commands. Furthermore, the API call command with the index IDX₆ is a print instruction API call command, and by referring to the field data using the text string "items.price" of the merge field as a key, it is determined that the print element corresponding to the text string "items.price" is an array element AE. Accordingly, the print API generation unit 11 determines that the API call commands with the indexes IDX₄ to IDX₇ are within the repeat range RR but that none thereof denote the end position of the repeat range RR.

The API call command with the index IDX₈ is a print instruction API call command, but the text string "Thank you" is not surrounded by the substitution rule "${}". Accordingly, the print API generation unit 11 determines that the API call command with the index IDX₈ is a print instruction API call command not including the substitution rule for the array elements AE, and therefore identifies the immediately preceding API call command with the index IDX₇ as the end position of the repeat range RR.

The print API generation unit 11 then generates a print data generation API (a substitute template) by replacing the merge fields of the plurality of print instruction API call commands included in the template with the data (the insertion values) of the print elements included in the field data. At this time, as shown in FIG. 8B, the print API generation unit 11 copies the API call commands included in the specified repeat range RR until the number of copies is identical to the number of array elements included in the field data, and then repeatedly executes processing for replacing the merge fields of the print instruction API call commands with the array element data a number of times corresponding to the number of array elements.

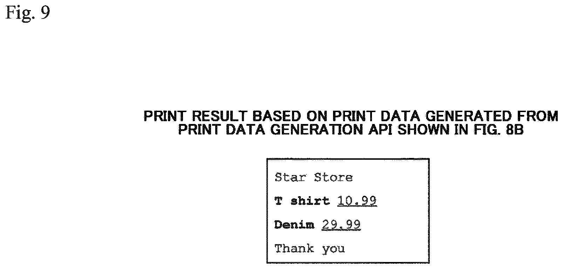

FIG. 9 is a view showing a print result obtained in a case where print data generated by the print data generation unit 12 on the basis of the print data generation API shown in FIG. 8B are output to the printer 20. In the example of the print data generation API shown in FIG. 8B, the "Underline" text styling is set in relation to the prices "price" following cancellation of the "Bold" text styling in relation to the product names "name". Accordingly, the product names are printed only with the bold text styling, and the prices are printed only with the underline text styling.

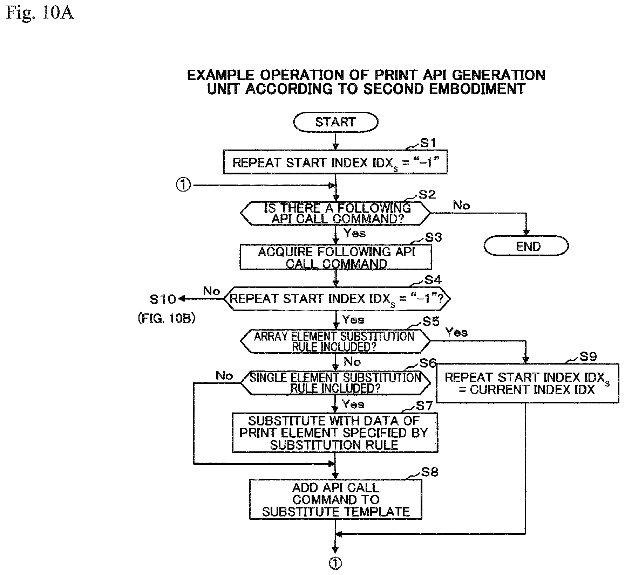

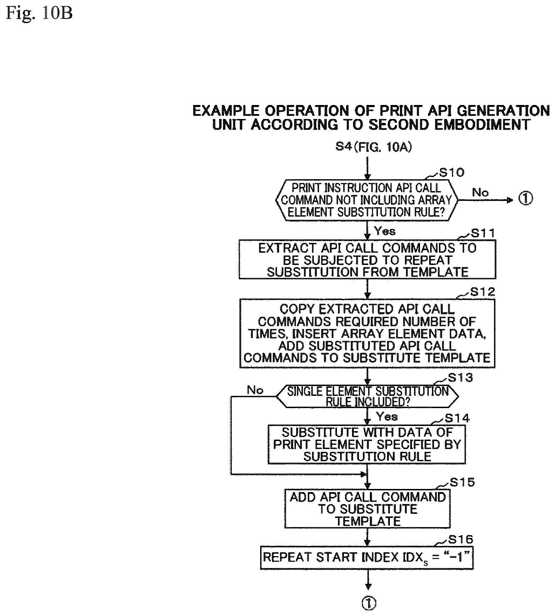

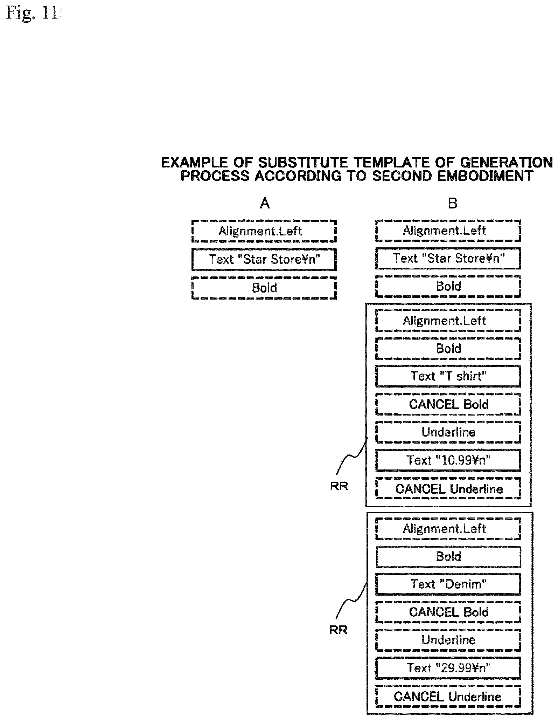

FIGS. 10A and 10B are flowcharts showing an operation of the print API generation unit 11 according to the second embodiment. FIGS. 11A and 11B are views showing an example of a substitute template of a generation process corresponding to the processing of these flowcharts. The operation will be described below using FIGS. 10A, 10B, 11A, and 11B.

First, the print API generation unit 11 initializes the value of a repeat start index IDX_{S}, which is used as a parameter, to "-1" (step S1). Next, the print API generation unit 11 determines whether or not a following API call command exists in the template (step S2), and when no following command exists, the processing of the flowcharts shown in FIGS. 10A and 10B is terminated.

When a following API call command exists, the print API generation unit 11 acquires the following API call command from the template (step S3) and determines whether or not the current value of the repeat start index IDX_{S} is "-1" (step S4). When the value of the repeat start index IDX_{S} is "-1", the print API generation unit 11 determines whether or not the API call command acquired in step S3 includes the array element substitution rule (step S5).

When the API call command does not include the array element substitution rule, the print API generation unit 11 determines whether or not the API call command includes the single element substitution rule (step S6). When the API call command includes the single element substitution rule, the print API generation unit 11 acquires the data of the single element specified by the substitution rule from the field data, and replaces the merge field of the API call command with the acquired data of the single element (step S7). The API call command is then added to the substitute template (step S8).

When, on the other hand, it is determined in step S6 that the API call command does not include the single element substitution rule, the processing of step S7 is skipped, and the API call command acquired in step S3 is added as is to the substitute template (step S8). Following the processing of step S8, the processing returns to step S2, where, if a following API call command exists, the following API call command is acquired (step S3).

At the stage where the API call commands with the indexes IDX₀ and IDX₂ shown in FIG. 8A have been acquired in step S3, the processing of step S7 is skipped, and the API call commands are added as is to the substitute template (step S8). Further, at the stage where the API call command with the index IDX₁ shown in FIG. 8A has been acquired in step S3, the merge field of the API call command is replaced with the data of the single element specified by the substitution rule (step S7), whereupon the API call command is added to the substitute template (step S8). As a result of the stages up to this point, the substitute template is configured as shown in FIG. 11A.

When it is determined in step S5 that the API call command includes the array element substitution rule, the value of the repeat start index IDX_{S} is updated to the current value of the index IDXᵢ of the API call command (step S9). The processing then returns to step S2. At the stage where the API call command with the index IDX₃ has been acquired in step S3, it is determined that the API call command includes the array element substitution rule, and therefore the value of the repeat start index IDX_{S} is updated to the index IDX₃. The index IDX₃ denotes the start position of the search for the repeat range RR.

When the value of the repeat start index IDX_{S} is updated, it is determined in step S4 after returning to step S2 that the value of the repeat start index IDX_{S} is not "-1". In this case, the print API generation unit 11 determines whether or not the API call command acquired in step S3 is a print instruction command that does not include the array element substitution rule (step S10). Here, when it is determined that the API call command is not a print instruction command that does not include the array element substitution rule, the processing returns to step S2. At the stage where the API call commands with the indexes IDX₄ to IDX₇ have been acquired in step S3, No is acquired in the determination of step S10.

When, on the other hand, it is determined in step S10 that the API call command is a print instruction command that does not include the array element substitution rule, the print API generation unit 11 extracts the API call commands to be subjected to repeat substitution, indicated hereafter, from the template (step S11): the styling instruction API call commands included from the start of the template up to a point one before the repeat start index IDX_{S}; and all of the API call commands included from the repeat start index IDX_{S} to a point one before the current index IDXᵢ.

In the example of FIG. 8A, at the stage where the API call command with the index IDX₈ has been acquired in step S3, it is determined that this API call command is a print instruction command that does not include the array element substitution rule. Accordingly, the print API generation unit 11 acquires the styling instruction API call commands included in the indexes IDX₀ to IDX₂ from the start of the template up to the point one before the repeat start index IDX₃, and all of the API call commands included in the indexes IDX₃ to IDX₇ from the repeat start index IDX₃ to the point one before the current index IDX₈. The plurality of API call commands acquired here are set as the repeat range RR.

Next, the print API generation unit 11 copies the plurality of API call commands acquired in the step S11 until the number of copies is identical to the number of array elements included in the field data, and then repeatedly executes processing for replacing the merge fields of the print instruction API call commands with the data of the array elements a number of times corresponding to the number of array elements. The executed plurality of API call commands are then added to the substitute template (step S12). As a result of the stages up to this point, the substitute template is configured as shown in FIG. 11B.

Next, the print API generation unit 11 determines whether or not the API call command with the index IDX₈, acquired in step S3, includes the single element substitution rule (step S13). When the API call command includes the single element substitution rule, the print API generation unit 11 acquires the data of the single element specified by the substitution rule from the field data, and replaces the merge field of the API call command with the acquired single element data (step S14). The API call command is then added to the substitute template (step S15).

When, on the other hand, the API call command does not include the single element substitution rule, the processing of step S14 is skipped and the API call command acquired in step S3 is added as is to the substitute template (step S15). By executing the processing of step S15, the substitute template enters the state of FIG. 8B. Next, the print API generation unit 11 returns the value of the repeat start index IDX_{S} to the initial value "-1" (step S16) and then returns to step S2. In the example template shown in FIG. 8A, there are no API call commands following the index IDX₈, and therefore the processing of the flowcharts shown in FIGS. 10A and 10B is terminated.

(Third embodiment) In the third embodiment, the template has a hierarchical structure but does not include the repeat start flag SF. In the third embodiment, the repeat range RR is specified on the basis of both the types of the API call commands included in the template and the field data, and also the hierarchical structure of the API call commands.

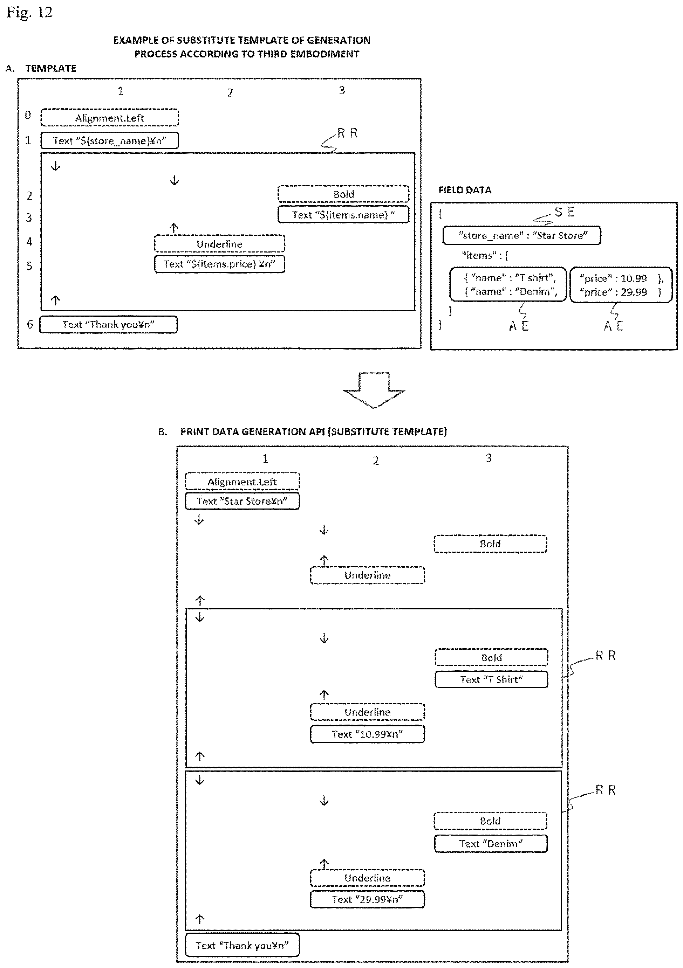

FIGS. 12A and 12B are views illustrating the processing content of the print API generation unit 11 according to the third embodiment. FIG. 12A shows an example of a template having a hierarchical structure and field data, wherein the repeat range RR specified by the print data API generation unit 11 is indicated on the template by a rectangular frame. The template includes hierarchy control functions, and in the figure, the symbol "↓" indicates downward movement through the layers of the hierarchy, and the symbol "↑" indicates upward movement through the layers of the hierarchy. The repeat range RR also includes hierarchy control functions. The field data are identical to the data shown in FIG. 6A. FIG. 12B shows an example of a print data generation API (a substitute template) generated by replacing the merge fields included in the API call commands, including repeat substitutions within the specified range, with the data of the print elements included in the field data.

As shown in FIG. 12A, the print API generation unit 11 specifies styling instruction API call commands and print instruction API call commands including the substitution rule for the repeated array elements, among the plurality of print elements included in the field data, as the repeat range RR from among the API call commands included on the uppermost layer and the layers therebelow, of the layers of the hierarchy that include print instruction API call commands including the array element substitution rule. The repeat range RR also includes hierarchy control functions associated with the API call commands specified as described above. In the example of FIG. 12A, the repeat range RR includes, as the associated hierarchy control functions, hierarchy control functions (four hierarchy control functions indicated by the symbols "↓" and "↑" on the first and second layers) for controlling transitions to the second and third layers including the specified API call commands and transitions from these layers. Which of the plurality of API call commands included in the template are print instruction API call commands including the substitution rule for the array elements AE can be determined by referring to the field data using the text strings in the merge fields of the print instruction API call commands as a key.

In the template shown in FIG. 12A, there are no print instruction API call commands including the substitution rule for the array elements AE on the first layer, but there are instruction API call commands including the substitution rule for the array elements AE on the second and third layers. Accordingly, the print API generation unit 11 specifies the styling instruction API call commands, the print instruction API call commands including the array element substitution rule, and the hierarchy control functions associated therewith, among the API call commands included on the second layer and the layers therebelow, as the repeat range RR. In the example shown in FIG. 12A, there is no print instruction API call command including the substitution rule for the single element SE on the second layer and the layers therebelow, and therefore all of the API call commands on the second layer and the layers therebelow are included in the repeat range RR.

The print API generation unit 11 then generates a print data API (a substitute template) by replacing the merge fields of the plurality of print instruction API call commands included in the template with the data (the insertion values) of the print elements included in the field data. At this time, as shown in FIG. 12B, the print API generation unit 11 copies the API call commands and the associated hierarchy control functions included in the specified repeat range RR until the number of copies is identical to the number of array elements included in the field data, and then repeatedly executes processing for replacing the merge fields of the print instruction API call commands with the array element data a number of times corresponding to the number of array elements.

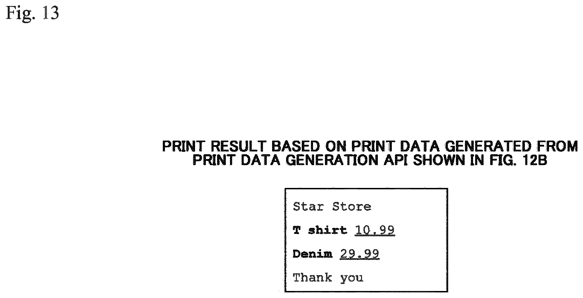

FIG. 13 is a view showing a print result obtained in a case where print data generated by the print data generation unit 12 on the basis of the print data generation API shown in FIG. 12B are output to the printer 20. In the example of the print data generation API shown in FIG. 12B, the "Bold" text styling is specified in relation to the product names "name" on the third layer, and the "Underline" text styling is specified thereafter in relation to the prices "price" on the second layer. Accordingly, the product names are printed only with the bold text styling, and the prices are printed only with the underline text styling.

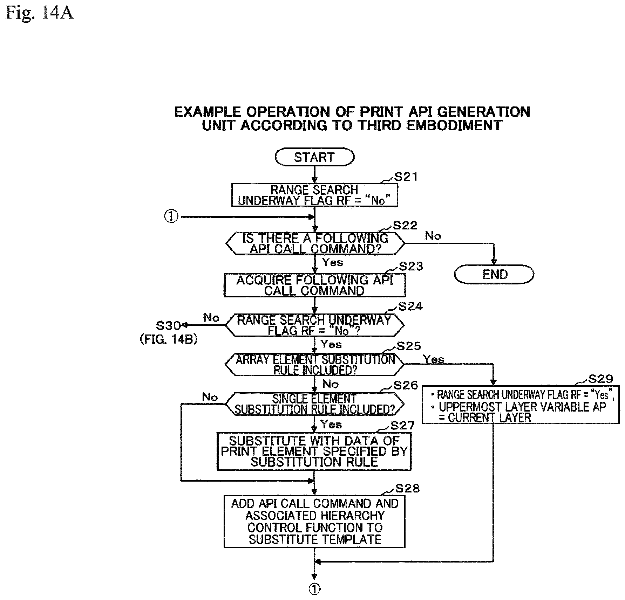

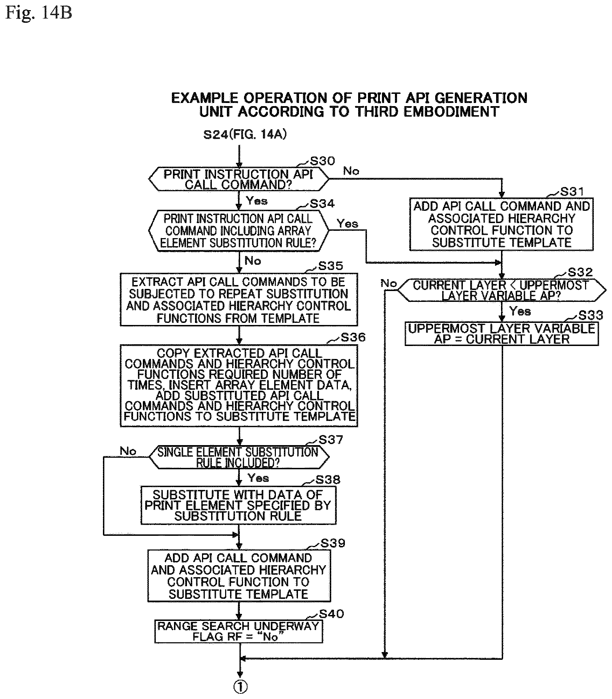

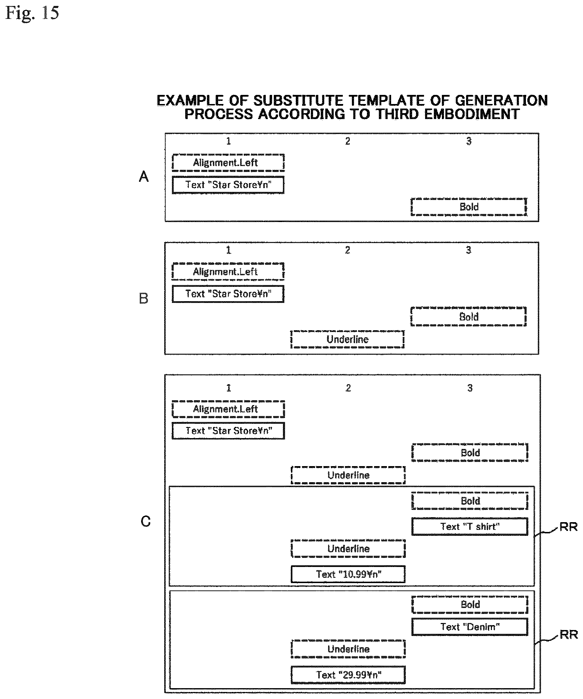

FIGS. 14A and 14B are flowcharts showing an operation of the print API generation unit 11 according to the third embodiment. In these flowcharts, a range search underway flag RF indicating whether or not the search for the repeat range RR is underway and an uppermost layer variable AP indicating the uppermost layer of the repeat range RR are used as parameters. FIGS. 15A and 15B are views showing an example of a substitute template of a generation process corresponding to the processing of these flowcharts. An operation will be described below using FIGS. 14A, 14B, 15A, and 15B. Note that the symbols "↑" and "↓" indicating the hierarchy control functions have been omitted from FIGS. 15A and 15B.

First, the print API generation unit 11 initializes the value of the range search underway flag RF to "No" (step S21). Next, the print API generation unit 11 determines whether or not a following API call command exists in the template (step S22), and when no following command exists, the processing of the flowcharts shown in FIGS. 14A and 14B is terminated.

When a following API call command exists, the print API generation unit 11 acquires the following API call command from the template (step S23) and determines whether or not the current value of the range search underway flag RF is "No" (step S24). When the value of the range search underway flag RF is "No", the print API generation unit 11 determines whether or not the API call command acquired in step S23 includes the array element substitution rule (step S25).

When the API call command does not include the array element substitution rule, the print API generation unit 11 determines whether or not the API call command includes the single element substitution rule (step S26). When the API call command includes the single element substitution rule, the print API generation unit 11 acquires the data of the single element specified by the substitution rule from the field data, and replaces the merge field of the API call command with the acquired data of the single element (step S27). The API call command is then added to the substitute template (step S28). At this time, if there is a hierarchy control function associated with the API call command, the hierarchy control function is added to the substitute template together therewith.

When, on the other hand, it is determined in step S26 that the API call command does not include the single element substitution rule, the processing of step S27 is skipped, and the API call command acquired in step S23 is added as is to the substitute template (step S28). At this time, if there is a hierarchy control function associated with the API call command, the hierarchy control function is added to the substitute template together therewith. Following the processing of step S28, the processing returns to step S22, where, if a following API call command exists, the following API call command is acquired (step S23).

At the stage where the API call commands with the indexes IDX₀ and IDX₂ shown in FIG. 12A have been acquired in step S23, the processing of step S27 is skipped, and the API call commands are added as is to the substitute template (step S28). At this time, the hierarchy control function associated with the API call command with the index IDX₂ is added to the substitute template together therewith. Further, at the stage where the API call command with the index IDX₁ shown in FIG. 12A has been acquired in step S23, the merge field of the API call command is replaced with the data of the single element specified by the substitution rule (step S27), whereupon the API call command is added to the substitute template (step S28). As a result of the stages up to this point, the substitute template is configured as shown in FIG. 15A.

When it is determined in step S25 that the API call command includes the array element substitution rule, the value of the range search underway flag RF is updated to "Yes", and the uppermost layer variable AP is set at the value of the current layer of the API call command (step S29). The processing then returns to step S22. At the stage where the API call command with the index IDX₃ has been acquired in step S23, it is determined that the API call command includes the array element substitution rule, and therefore the value of the range search underway flag RF is updated to "Yes", and the value "3" indicating the third layer is set as the value of the uppermost layer variable AP.

When the value of the range search underway flag RF is updated to "Yes", it is determined in step S24 after returning to step S22 that the value of the range search underway flag RF is not "No". In this case, the print API generation unit 11 determines whether or not the API call command acquired in step S23 is a print instruction command (step S30). Here, when it is determined that the API call command is not a print instruction command, the print API generation unit 11 adds the API call command acquired in step S23 as is to the substitute template (step S31). At this time, if there is a hierarchy control function associated with the API call command, the hierarchy control function is added to the substitute template together therewith. As a result of the stages up to acquisition of the API call command with the index IDX₄, the substitute template is configured as shown in FIG. 15B. At this time, the hierarchy control function associated with the API call command with the index IDX₄ is added to the substitute template together therewith.

Next, the print API generation unit 11 determines whether or not the value of the current layer is smaller than the value of the uppermost layer variable AP (step S32). When the value of the current layer is smaller, the value of the uppermost layer variable AP is updated to the value of the current layer (step S33). The processing then returns to step S22. When, on the other hand, the value of the current layer is not smaller than the value of the uppermost layer variable AP, the processing of step S33 is skipped and the processing returns to step S22. At the stage where the API call command with the index IDX₄ has been acquired in step S23, the processing of step S33 is executed so as to update the value of the uppermost layer variable AP to the value "2" of the current layer.

When it is determined in step S30 that the API call command acquired in step S23 is a print instruction command, the print API generation unit 11 then determines whether or not the print instruction API call command includes the array element substitution rule (step S34). Here, when it is determined that the command includes the array element substitution rule, the processing advances to step S32. At the stage where the API call command with the index IDX₅ has been acquired in step S23, since the command includes the array element substitution rule, the processing advances to step S32. In this case, the value of the current layer is not smaller than the value of the uppermost layer variable AP, and therefore the processing of step S33 is skipped and the processing returns to step S22.

When, on the other hand, it is determined in step S34 that the command does not include the array element substitution rule, the print API generation unit 11 extracts the API call commands of the repeat substitution subjects and the associated hierarchy control functions from the template (step S35). In the third embodiment, the styling instruction API call commands and the print instruction API call commands including the array element substitution rule, among the API call commands included on the uppermost layer, indicated by the uppermost layer variable AP, and the layers therebelow, as well as the hierarchy control functions associated therewith are extracted from the template. In the example of FIG. 12A, the API call commands with the indexes IDX₂ to IDX₅ and the hierarchy control functions associated therewith are extracted from the template. The plurality of API call commands and hierarchy control functions extracted here are set as the repeat range RR.

Next, the print API generation unit 11 copies the plurality of API call commands and hierarchy control functions acquired in step S35 until the number of copies is identical to the number of array elements included in the field data, and then repeatedly executes processing for replacing the merge fields of the print instruction API call commands with the data of the array elements a number of times corresponding to the number of array elements. The executed plurality of API call commands and the hierarchy control functions are then added to the substitute template (step S36). As a result of the stages up to this point, the substitute template is configured as shown in FIG. 15C.

Next, the print API generation unit 11 determines whether or not the API call command with the index IDX₆, acquired in step S23, includes the single element substitution rule (step S37). When the API call command includes the single element substitution rule, the print API generation unit 11 acquires the data of the single element specified by the substitution rule from the field data, and replaces the merge field of the API call command with the acquired data of the single element (step S38). The API call command is then added to the substitute template (step S39). At this time, if there is a hierarchy control function associated with the API call command, the hierarchy control function is added to the substitute template together therewith.

When, on the other hand, the API call command does not include the single element substitution rule, the processing of step S38 is skipped, and the API call command acquired in step S23 is added as is to the substitute template (step S39). At this time, if there is a hierarchy control function associated with the API call command, the hierarchy control function is added to the substitute template together therewith. By executing the processing of step S39, the substitute template enters the state shown in FIG. 12B. Next, the print API generation unit 11 returns the value of the range search underway flag RF to the initial value "No" (step S40) and then returns to step S22. In the example template shown in FIG. 12A, there are no API call commands following the index IDX₆, and therefore the processing of the flowcharts shown in FIGS. 14A and 14B is terminated.

In this embodiment, as described in detail above, print data including a plurality of print-related commands are generated using a template and field data including data of print elements to be inserted into merge fields of API call commands included in the template. In the template, the plurality of API call commands are constituted by a group of commands of the smallest unit not including repetitions, the number of which corresponds to the number of print elements, which is variable. A print data generation API including a plurality of API call commands is then generated by specifying the repeat range RR from among the plurality of API call commands included in the template, and replacing the merge fields included in the API call commands, including repeat substitutions within the specified range, with the data of the print elements, whereupon print data including print-related commands into which the data of the print elements have been inserted is generated by executing the generated print data generation API.

According to this embodiment, configured as described above, the print data generation API is generated by copying the print instruction API call commands including the array element substitution rule and the styling instruction API call commands associated therewith in the required number in accordance with the number of array elements, and then inserting the data of the array elements into the merge fields, whereupon the print data are generated by executing the print data generation API. In the call source application (the print data generation program), therefore, the API call commands included in the generated print data generation API need only be executed once each in order from the start. Thus, print data with a variable number of print elements can be generated and merge printing can be executed without incorporating description required in order to repeatedly call the API call commands in the program code of the call source application. As a result, the readability of the program code of the application serving as the API call source can be improved.

Note that in the first embodiment described above, the repeat start flag SF may be set in a plurality of locations within the template. For example, when merge printing is performed by disposing a print element with a fixed number of elements after a print element with a variable number of elements and disposing a print element with a variable number of elements thereafter, the repeat start flag SF can be set in two locations corresponding respectively to the first print element with a variable number of elements and the next print elements with a variable number of elements.

Furthermore, in the second and third embodiments described above, examples in which the repeat range RR is specified on the basis of both the types of the API call commands and the field data were described, but the repeat range RR may be specified without referring to the field data. For example, the types of the API call commands may be determined on the basis of the text strings of the API call commands, and the repeat range RR may be specified on the basis of the types of the API call commands. In this case, associations indicating which text strings correspond to which types of API call commands are defined in advance, whereupon a template and a program that references the template are created in accordance with the definitions.

Moreover, in the third embodiment described above, an example in which the repeat range RR is specified by extracting from the template the styling instruction API call commands and the print instruction API call commands including the array element substitution rule, among the API call commands included on the uppermost layer, indicated by the uppermost layer variable AP, and the layers therebelow. In other words, of the API call commands included in the layer including the repeat start flag SF and the layers therebelow, the styling instruction API call commands and the print instruction API call commands including the array element substitution rule may be specified as the repeat range RR.

Furthermore, in the first to third embodiments described above, configurations in which the template includes a plurality of API call commands were described, but the template may be configured to include only one API call command. In this case, for example, the print API generation unit 11 determines whether or not the API call command included in the template is a print instruction API call command including the substitution rule for repeated array elements, and having determined that the API call command is a print instruction API call command including the array element substitution rule, specifies the command as the API call command repeat range.

Note that in the first to third embodiments described above, the format of the substituted text strings may be specified in accordance with a substitution rule for the API call commands included in the template. For example, the merge field for the substitution rule that starts with the symbol ${ and ends with the symbol } may be configured as shown below (the symbols "" and + are explanatory and are not actually written), thereby making it possible to specify a representation or a layout of the text string when the field data are inserted into the merge field in accordance with the content of a format specifier.
"${" + "key" + "format specifier" + "}"

The following specifiers, for example, can be used as the format specifier.
(A) Format specifier for numerical field data
   When the field data are a numerical value, the type of text string that the field data will be replaced with can be specified using a format specifier used in the printf function in C language or the like. Several specific examples are illustrated below.
   %d: Stringification as a signed decimal integer.
   %f: Stringification as a decimal.
   %1d: Stringification as a single-digit signed decimal integer.
   %5.2f: Stringification as a decimal with a total of five digits, including the decimal point, and two decimal places after the decimal point.
(B) Format specifier specifying the number of characters
   The number of substituted characters and the existence of omissions can be specified by a format specifier. Several specific examples are illustrated below.
   %digit=4,last: The number of substituted characters is set at 4. The end of the field data is truncated.
   %digit=10,last,ellipsis: The number of substituted characters is set at 10. The end of the field data is truncated, and an omission symbol (...) is added.
   %digit=10,middle,ellipsis: The number of substituted characters is set at 10. The middle of the field data is truncated, and the omission symbol (...) is added.
   %digit=10,first,ellipsis: The number of substituted characters is set at 10. The start of the field data is truncated, and the omission symbol (...) is added.

Thus, when the field data are a numerical value, for example, the text string obtained when the numerical value is inserted into the merge field of the template can be controlled. For example, when the field data are pi 3.14159265359, it is possible to specify whether the value will be printed on the template as "3", "3.14", or "3.14159265359". Furthermore, when the width of the printing sheet is narrow such that there is a limit on the number of characters that fit on one line, it is possible, by means of template specification, to avoid an unintended line break where the text string of the field data is too long to fit on one line and the printed text extends onto the next line.

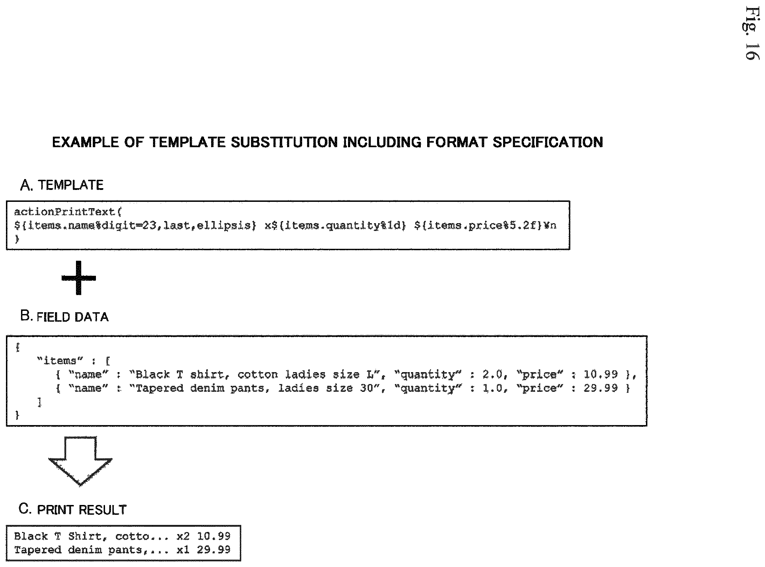

A specific example is described below. Here, an example in which the printing sheet is a receipt and a text string including a list of items is printed will be described. The number of characters that can be printed on one line of the receipt is 32, making it necessary to keep the number of characters of one line of the print data to within 32 characters. In this case, a template that has been subjected to format specification, as shown in FIG. 16A, for example, is prepared.

On the template shown in FIG. 16A, the part "${items.name%digit=23,last,ellipsis}" specifies that the product name is to be 23 characters long, and if the product name does not fit, the end is to be truncated and "..." is to be added. At this point, 23/32 characters are printed on one line. The next part "x" is a fixed text string disposed before a quantity substitution rule. At this point, 25/32 characters are printed on one line. The next part "${items.quantity%1d}" specifies that the numerical value of the quantity is to be stringified as a single-digit decimal integer. At this point, 26/32 characters are printed on one line. The next part "" is a fixed text string disposed before a unit price substitution rule. At this point, 27/32 characters are printed on one line. The next part "${items.price%5.2f}\n" specifies that the numerical value of the unit price is to be stringified as a decimal with a total of five digits, including the decimal point, and two decimal places after the decimal point. At this point, 32/32 characters are printed on one line. Finally, a line break is performed in accordance with "\n".

When the template of FIG. 16A is used in combination with the field data of FIG. 16B, the print result of FIG. 16C is obtained. Thus, by using the substitution rules of the template to specify the number of characters, the layout of the text string on one line can be specified flexibly. Moreover, the numerical values of the field data can be stringified in a format corresponding to a receipt layout.

In addition, all of the embodiments described above merely illustrate specific examples of implementation of the present invention, and the technical scope of the present invention is not to be interpreted as being limited thereby, but by the scope of the appended claims.

## Claims

1. A print data generation device that generates print data including a plurality of print-related commands using a template and field data including data of print elements to be inserted into merge fields of the template,
the template including one or more application programming interface, API, call commands for generating the print-related commands, and
the one or more API call commands being constituted by commands of the smallest unit not including repetitions, the number of which corresponds to the number of print elements, which is variable,
the print data generation device comprising:
a print API generation unit which, on the basis of the content of both the template and the field data or the content of the template, specifies, from the template, a range of API call commands for repeatedly executing processing a number of times corresponding to the variable number of print elements, and generates a print data generation API including a plurality of API call commands by replacing the merge fields included in the API call commands, including repeat substitutions within the specified range, with the data of the print elements; and
a print data generation unit which, by executing the print data generation API generated by the print API generation unit, generates the print data including print-related commands into which the data of the print elements have been inserted.

2. The print data generation device according to claim 1, wherein the template includes a plurality of API call commands, has a hierarchical structure of the plurality of API call commands, and includes a repeat start flag on one layer of the hierarchy, and the print API generation unit specifies the range of the API call commands for executing the repeat substitutions on the basis of the repeat start flag and the hierarchical structure.

3. The print data generation device according to claim 2, wherein the print API generation unit specifies the API call commands included on a layer that includes the repeat start flag and layers therebelow as the range of the API call commands for executing the repeat substitutions.

4. The print data generation device according to claim 2, wherein the print API generation unit specifies a styling instruction API call command and a print instruction API call command including a substitution rule for repeated array elements, among the API call commands included on the layer that includes the repeat start flag and the layers therebelow, as the range of the API call commands for executing the repeat substitutions.

5. The print data generation device according to claim 1, wherein the print API generation unit specifies the range of the API call commands for executing the repeat substitutions on the basis of both the types of the API call commands and the field data or the types of the API call commands.

6. The print data generation device according to claim 5, wherein the print API generation unit specifies all the API call commands from a print instruction API call command including a substitution rule for repeated array elements among the plurality of print elements included in the filed data through the API call command immediately before a print instruction API call command not including the substitution rule, and a styling instruction API call command existing before the print instruction API call command including the substitution rule, as the range of the API call commands for executing the repeat substitutions.

7. The print data generation device according to claim 1, wherein the template includes a plurality of API call commands and has a hierarchical structure of the plurality of API call commands, and the print API generation unit specifies the range of the API call commands for executing the repeat substitutions on the basis of both the types of the API call commands and the field data or the types of the API call commands, and the hierarchical structure.

8. The print data generation device according to claim 7, wherein the print API generation unit specifies, from among the API call commands included on an uppermost layer and layers therebelow of the hierarchical structure that includes a print instruction API call command including a substitution rule for repeated array elements among the plurality of print elements included in the filed data, a styling instruction API call command and the print instruction API call command including the substitution rule, as the range of the API call commands for executing the repeat substitutions.

9. A print data generation method for generating print data including a plurality of print-related commands using a template and field data including data of print elements to be inserted into merge fields of the template,
the template including one or more application programming interface, API, call commands for generating the print-related commands, and
the one or more API call commands being constituted by commands of the smallest unit not including repetitions, the number of which corresponds to the number of print elements, which is variable,
the print data generation method comprising:
a first step in which a print API generation unit of a print data generation device specifies, from the template on the basis of the content of both the template and the field data or the content of the template, a range of API call commands for repeatedly executing processing a number of times corresponding to the variable number of print elements, and generates a print data generation API including a plurality of API call commands by replacing the merge fields included in the API call commands, including repeat substitutions within the specified range, with the data of the print elements; and
a second step in which a print data generation unit of the print data generation device executes the print data generation API generated by the print API generation unit in order to generate the print data including print-related commands into which the data of the print elements have been inserted.

## Patentansprüche

1. Druckdatenerzeugungsvorrichtung, die Druckdaten einschließlich einer Vielzahl von druckbezogenen Befehlen unter Verwendung einer Vorlage und von Felddaten erzeugt, die Daten von Druckelementen beinhalten, die in die Seriendruckfelder der Vorlage eingefügt werden sollen,
wobei die Vorlage eine oder mehrere Anwendungsprogrammierschnittstellen-, API-, Aufrufbefehle zum Erzeugen der druckbezogenen Befehle beinhaltet, und
wobei der eine oder die mehreren API-Aufrufbefehle aus Befehlen der kleinsten Einheit bestehen, die keine Wiederholungen beinhalten, deren Anzahl der Anzahl der Druckelemente entspricht, die variabel ist,
wobei die Druckdatenerzeugungsvorrichtung Folgendes umfasst:
eine Druck-API-Erzeugungseinheit, die auf der Grundlage des Inhalts sowohl der Vorlage als auch der Felddaten oder des Inhalts der Vorlage aus der Vorlage einen Bereich von API-Aufrufbefehlen spezifiziert, um die Verarbeitung eine Anzahl von Malen entsprechend der variablen Anzahl von Druckelementen wiederholt auszuführen, und eine Druckdatenerzeugungs-API erzeugt, die eine Vielzahl von API-Aufrufbefehlen beinhaltet, durch Ersetzen der Seriendruckfelder, die in den API-Aufrufbefehlen enthalten sind, einschließlich Wiederholungsersetzungen innerhalb des spezifizierten Bereichs, durch die Daten der Druckelemente; und
eine Druckdatenerzeugungseinheit, die durch Ausführung der von der Druck-API-Erzeugungseinheit erzeugten Druckdatenerzeugungs-API die Druckdaten erzeugt, die druckbezogene Befehle beinhalten, in die die Daten der Druckelemente eingefügt wurden.

2. Druckdatenerzeugungsvorrichtung nach Anspruch 1, wobei die Vorlage eine Vielzahl von API-Aufrufbefehlen beinhaltet, eine hierarchische Struktur der Vielzahl von API-Aufrufbefehlen aufweist und auf einer Ebene der Hierarchie ein Wiederholungsstart-Flag beinhaltet, und wobei die Druck-API-Erzeugungseinheit den Bereich der API-Aufrufbefehle zur Ausführung der Wiederholungsersetzungen auf der Grundlage des Wiederholungsstart-Flags und der hierarchischen Struktur spezifiziert.

3. Druckdatenerzeugungsvorrichtung nach Anspruch 2, wobei die Druck-API-Erzeugungseinheit die API-Aufrufbefehle, die auf einer Ebene beinhaltet sind, die das Wiederholungsstart-Flag beinhaltet und darunter liegende Ebenen, als Bereich der API-Aufrufbefehle zur Ausführung der Wiederholungsersetzungen spezifiziert.

4. Druckdatenerzeugungsvorrichtung nach Anspruch 2, wobei die Druck-API-Erzeugungseinheit unter den API-Aufrufbefehlen, die auf der Ebene beinhaltet sind, die das Wiederholungsstart-Flag beinhaltet, und auf den darunterliegenden Ebenen, einen Formatierungsanweisungs-API-Aufrufbefehl und einen Druckanweisungs-API-Aufrufbefehl, der eine Ersetzungsregel für wiederholte Array-Elemente beinhaltet, als den Bereich der API-Aufrufbefehle zur Ausführung der Wiederholungsersetzungen spezifiziert.

5. Druckdatenerzeugungsvorrichtung nach Anspruch 1, wobei die Druck-API-Erzeugungseinheit den Bereich der API-Aufrufbefehle zur Ausführung der Wiederholungsersetzungen sowohl auf der Grundlage der Typen der API-Aufrufbefehle als auch auf der Grundlage der Felddaten oder der Typen der API-Aufrufbefehle spezifiziert.

6. Druckdatenerzeugungsvorrichtung nach Anspruch 5, wobei die Druck-API-Erzeugungseinheit alle API-Aufrufbefehle aus einem Druckanweisungs-API-Aufrufbefehl, der eine Ersetzungsregel für wiederholte Array-Elemente unter der Vielzahl der in den abgelegten Daten enthaltenen Druckelemente beinhaltet, durch den API-Aufrufbefehl unmittelbar vor einem Druckanweisungs-API-Aufrufbefehl, der die Ersetzungsregel nicht beinhaltet, sowie einen Formatierungsanweisungs-API-Aufrufbefehl, der vor dem die Ersetzungsregel beinhaltenden Druckanweisungs-API-Aufrufbefehl existiert, als den Bereich der API-Aufrufbefehle zur Ausführung der Wiederholungsersetzungen spezifiziert.

7. Druckdatenerzeugungsvorrichtung nach Anspruch 1, wobei die Vorlage eine Vielzahl von API-Aufrufbefehlen beinhaltet und eine hierarchische Struktur der Vielzahl von API-Aufrufbefehlen aufweist, und die Druck-API-Erzeugungseinheit den Bereich der API-Aufrufbefehle zur Ausführung der Wiederholungsersetzungen sowohl auf der Grundlage der Typen der API-Aufrufbefehle als auch auf der Grundlage der Felddaten oder der Typen der API-Aufrufbefehle und der hierarchischen Struktur spezifiziert.

8. Druckdatenerzeugungsvorrichtung nach Anspruch 7, wobei die Druck-API-Erzeugungseinheit aus den API-Aufrufbefehlen, die auf einer obersten Ebene und darunterliegenden Ebenen der hierarchischen Struktur beinhaltet sind, die einen Druckanweisungs-API-Aufrufbefehl beinhaltet, der eine Ersetzungsregel für wiederholte Array-Elemente unter der Vielzahl der in den abgelegten Daten enthaltenen Druckelemente beinhaltet, einen Formatierungsanweisungs-API-Aufrufbefehl und den Druckanweisungs-API-Aufrufbefehl, der die Ersetzungsregel beinhaltet, als den Bereich der API-Aufrufbefehle zur Ausführung der Wiederholungsersetzungen spezifiziert.

9. Druckdatenerzeugungsverfahren zum Erzeugen von Druckdaten einschließlich einer Vielzahl von druckbezogenen Befehlen unter Verwendung einer Vorlage und von Felddaten, die Daten von Druckelementen beinhalten, die in die Seriendruckfelder der Vorlage eingefügt werden sollen,
wobei die Vorlage eine oder mehrere Anwendungsprogrammierschnittstellen-, API-, Aufrufbefehle zum Erzeugen der druckbezogenen Befehle beinhaltet, und
wobei der eine oder die mehreren API-Aufrufbefehle aus Befehlen der kleinsten Einheit bestehen, die keine Wiederholungen beinhalten und deren Anzahl der Anzahl der Druckelemente entspricht, die variabel ist,
wobei das Druckdatenerzeugungsverfahren Folgendes umfasst:
einen ersten Schritt, in dem eine Druck-API-Erzeugungseinheit einer Druckdatenerzeugungsvorrichtung, auf der Grundlage des Inhalts sowohl der Vorlage als auch der Felddaten oder des Inhalts der Vorlage aus der Vorlage einen Bereich von API-Aufrufbefehlen spezifiziert, um die Verarbeitung eine Anzahl von Malen entsprechend der variablen Anzahl von Druckelementen wiederholt auszuführen, und eine Druckdatenerzeugungs-API erzeugt, die eine Vielzahl von API-Aufrufbefehlen beinhaltet, durch Ersetzen der Seriendruckfelder, die in den API-Aufrufbefehlen enthalten sind, einschließlich Wiederholungsersetzungen innerhalb des spezifizierten Bereichs, durch die Daten der Druckelemente; und
einen zweiten Schritt, in dem eine Druckdatenerzeugungseinheit der Druckdatenerzeugungsvorrichtung die von der Druck-API-Erzeugungseinheit erzeugte Druckdatenerzeugungs-API ausführt, um die Druckdaten zu erzeugen, die druckbezogene Befehle beinhalten, in die die Daten der Druckelemente eingefügt wurden.

## Revendications

1. Dispositif de génération de données d'impression qui génère des données d'impression comportant une pluralité de commandes relatives à l'impression à l'aide d'un modèle et de données de champ comportant des données d'éléments d'impression à insérer dans des champs de fusion du modèle,
le modèle comportant une ou plusieurs commandes d'appel d'interfaces de programmation d'application, API, permettant de générer les commandes relatives à l'impression, et
la ou les commandes d'appel d'API étant constituées de commandes de la plus petite unité ne comportant pas de répétitions, dont le nombre correspond au nombre d'éléments d'impression, lequel varie,
le dispositif de génération de données d'impression comprenant :
une unité de génération d'API d'impression qui, sur la base à la fois du contenu du modèle et des données de champ ou du contenu du modèle, spécifie, à partir du modèle, une gamme de commandes d'appel d'API permettant d'exécuter de façon répétée le traitement un certain nombre de fois correspondant au nombre variable d'éléments d'impression, et génère une API de génération de données d'impression comportant une pluralité de commandes d'appel d'API en remplaçant les champs de fusion figurant dans les commandes d'appel d'API, y compris des substitutions répétées dans la gamme spécifiée, par les données des éléments d'impression ; et
une unité de génération de données d'impression qui, par exécution de l'API de génération de données d'impression générée par l'unité de génération d'API d'impression, génère les données d'impression comportant des commandes relatives à l'impression dans lesquelles les données des éléments d'impression ont été insérées.

2. Dispositif de génération de données d'impression selon la revendication 1, dans lequel le modèle comporte une pluralité de commandes d'appel d'API, présente une structure hiérarchique de la pluralité de commandes d'appel d'API et comporte un indicateur de début de répétition sur une couche de la hiérarchie, et l'unité de génération d'API d'impression spécifie la plage des commandes d'appel d'API permettant d'exécuter des substitutions répétées sur la base de l'indicateur de début de répétition et de la structure hiérarchique.

3. Dispositif de génération de données d'impression selon la revendication 2, dans lequel l'unité de génération d'API d'impression spécifie les commandes d'appel d'API figurant dans une couche qui comporte l'indicateur de début de répétition et des couches en dessous de celle-ci en tant que gamme des commandes d'appel d'API permettant d'exécuter les substitutions répétées.

4. Dispositif de génération de données d'impression selon la revendication 2, dans lequel l'unité de génération d'API d'impression spécifie une commande d'appel d'API d'instruction de mise en forme et une commande d'appel d'API d'instruction d'impression comportant une règle de substitution pour des éléments répétés de tableau, parmi les commandes d'appel d'API figurant dans la couche qui comporte l'indicateur de début de répétition et les couches en dessous de celle-ci, en tant que gamme des commandes d'appel d'API permettant d'exécuter les substitutions répétées.

5. Dispositif de génération de données d'impression selon la revendication 1, dans lequel l'unité de génération d'API d'impression spécifie la gamme des commandes d'appel d'API permettant d'exécuter les substitutions répétées sur la base, à la fois, des types des commandes d'appel d'API et des données de champ, ou des types des commandes d'appel d'API.

6. Dispositif de génération de données d'impression selon la revendication 5, dans lequel l'unité de génération d'API d'impression spécifie toutes les commandes d'appel d'API à partir d'une commande d'appel d'API d'instruction d'impression comportant une règle de substitution pour des éléments répétés de tableau parmi la pluralité d'éléments d'impression figurant dans les données de champ par l'intermédiaire de la commande d'appel d'API juste avant une commande d'appel d'API d'instruction d'impression ne comportant pas la règle de substitution, et d'une commande d'appel d'API d'instruction de mise en forme existant avant la commande d'appel d'API d'instruction d'impression comportant la règle de substitution, en tant que gamme des commandes d'appel d'API permettant d'exécuter les substitutions répétées.

7. Dispositif de génération de données d'impression selon la revendication 1, dans lequel le modèle comporte une pluralité de commandes d'appel d'API et présente une structure hiérarchique de la pluralité de commandes d'appel d'API, et l'unité de génération d'API d'impression spécifie la gamme des commandes d'appel d'API permettant d'exécuter les substitutions répétées sur la base, à la fois, des types des commandes d'appel d'API et des données de champ ou des types des commandes d'appel d'API, et de la structure hiérarchique.

8. Dispositif de génération de données d'impression selon la revendication 7, dans lequel l'unité de génération d'API d'impression spécifie, à partir des commandes d'appel d'API figurant dans la couche la plus haute et des couches situées en dessous de celle-ci de la structure hiérarchique qui comporte une commande d'appel d'API d'instruction d'impression comportant une règle de substitution pour des éléments répétés de tableau parmi la pluralité d'éléments d'impression figurant dans les données de champ, une commande d'appel d'API d'instruction de mise en forme et la commande d'appel d'API d'instruction d'impression comportant la règle de substitution, en tant que gamme des commandes d'appel d'API permettant d'exécuter les substitutions répétées.

9. Procédé de génération de données d'impression permettant de générer des données d'impression comportant une pluralité de commandes relatives à l'impression à l'aide d'un modèle et de données de champ comportant des données d'éléments d'impression à insérer dans des champs de fusion du modèle,
le modèle comportant une ou plusieurs commandes d'appel d'interfaces de programmation d'application, API, permettant de générer les commandes relatives à l'impression, et
la ou les commandes d'appel d'API étant constituées de commandes de la plus petite unité ne comportant pas de répétitions, dont le nombre correspond au nombre d'éléments d'impression, lequel varie,
le procédé de génération de données d'impression comprenant :
une première étape au cours de laquelle une unité de génération d'API d'impression d'un dispositif de génération de données d'impression spécifie, à partir du modèle et sur la base du contenu du modèle et des données de champ ou du contenu du modèle, une gamme de commandes d'appel d'API permettant d'exécuter de façon répétée le traitement un certain nombre de fois correspondant au nombre variable d'éléments d'impression, et génère une API de génération de données d'impression comportant une pluralité de commandes d'appel d'API en remplaçant les champs de fusion figurant dans les commandes d'appel d'API, y compris les substitutions répétées dans la gamme spécifiée, par les données des éléments d'impression ; et
une seconde étape au cours de laquelle une unité de génération de données d'impression du dispositif de génération de données d'impression exécute l'API de génération de données d'impression générée par l'unité de génération d'API d'impression afin de générer les données d'impression comportant des commandes relatives à l'impression dans lesquelles les données des éléments d'impression ont été insérées.
